Europäisches Patentamt

European Patent Office

Office européen des brevets

(19)

(11) **EP 1 681 535 A1**

(12) **EUROPEAN PATENT APPLICATION**

(43) Date of publication:
19.07.2006 Bulletin 2006/29

(51) Int Cl.:
*G01C 19/00* (2006.01)        *F03G 3/08* (2006.01)

(21) Application number: 05000950.5

(22) Date of filing: 18.01.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Marina Lobova
Chatuchak,
Bangkok 10900 (TH)**

(72) Inventor: **Shipov, Gennady
Chatuchak,
Bangkok 10900 (TH)**

(74) Representative: **Grünecker, Kinkeldey,
Stockmair & Schwanhäusser
Anwaltssozietät
Maximilianstrasse 58
80538 München (DE)**

(54) **Propulsion system**

(57)    The device is a state-of-the-art universal 4-D Warp Engine, demonstrating simplest vacuum teleportation created by its own local curvature of the space-time. The 4-D Warp Engine is based upon the 4 dimensional gyroscope (4-D gyroscope), represented by a propulsion system of three solid bodies, interacting among themselves and rotating in one space plane and in one space-time plane. The local metric changes, creating Riemann's space curvature, occur due to servomotor's work, controlled by the software.

**FIG.3**

**Description**

**BACKGROUND OF THE INVENTION**

**1. Field of the Invention**

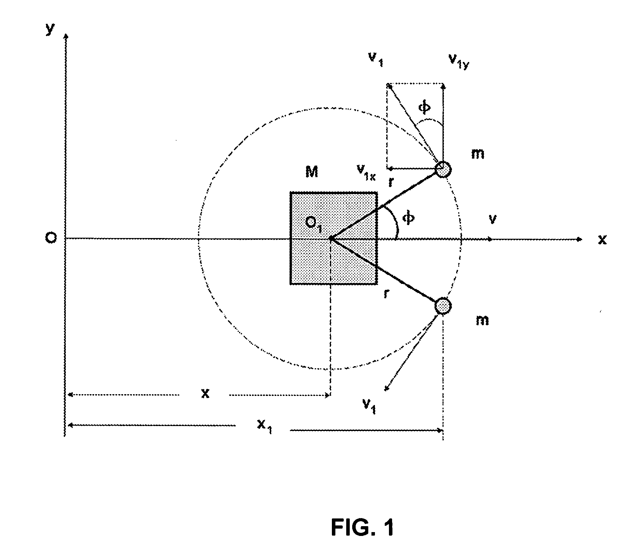

Einstein's idea about the possibility of the geometrization of all the physics theories, including mechanics, has been implemented by 4-D gyroscope.
The invention represents the device, allowing to control local space-time metrics as well as demonstrating the motion of the center of masses as a result of artificially created uncompensated inertial forces. The device is based upon 4-D gyroscope, the principle design of which is represented on **Fig. 1.** The 4-D gyroscope presents a specific combination of a rotator (synchronized rotation of 2 masses **m** around axis **O₁** in different directions) and an oscillator (periodical translational motion of mass **M** along axis **x**)
This system had been named 4-D gyroscope due to its equations, that are invariant relatively its Galilee's local group, where the translational accelerated motion of mass **M** is viewed as a rotation in space-time XCT plane (boost), i.e.

$$\frac{dv_x}{dt} = c(1-\beta^2)\frac{d\theta_x}{dt},$$

where c- speed of light, $\beta = v/c$ and $\theta_x$ - angle in plane *XCT.*
The Lagrange function of free 4-D gyroscope

$$T = (M+2m)\dot{x}^2/2 - 2mr\dot{x}\,\omega\sin(\phi) + mr^2\omega^2 = const$$

leads to the following equations of motion

$$\ddot{x} - B\frac{d}{dt}(\omega\sin\phi) = 0, \quad (A)$$

$$r\dot{\omega} - \ddot{x}\,\sin\phi = 0, \qquad (B)$$

where *M* - body mass, x-coordinate of the center of the body, $x = v$ - body's velocity, *m* - mass of the rotating masses, *r*-length of the rods, $\omega=\phi$ -angular velocity of the rotation of masses. After solution of the equations (A) and (B) it follows, that in ideal case:

1) The total energy of free 4-D gyroscope is being conserved, although all its component masses are accelerating.
2) The center of masses is at rest or moves uniformerly and linearly.
3) Three compensated inertial forces are acting upon the center of masses according to the equation

$$(M+2m)\dot{v}_c = (M+2m)\ddot{v} - 2mr\dot{\omega}\,\sin\phi - 2mr\omega^2\cos\phi = 0,$$

where $v_c$ - velocity of the center of masses.

The accelerated motion due to inertia of masses could be described fundamentally, if we describe the dynamics of the system with the help of geodesic nonrelativistic equations

$$\frac{d^2 x^i}{ds^2} + \Gamma^i{}_{jk} \frac{dx^j}{ds} \frac{dx^k}{ds} = 0 \quad i, j, k \ldots = 1, 2 \tag{1}$$

configure space with local metrics, defined as

$$ds^2 = g_{ij} dx^i dx^j = \frac{2T}{(M + 2m)} dt^2 \tag{2}$$

where T - total energy of 4-D gyroscope while the metric tensor has to be defined as

$$g_{ij} = \begin{pmatrix} 1 & 0 \\ 0 & g' \end{pmatrix}, \quad g' = k^2 (1 - k^2 \sin^2 \phi), \quad k^2 = \frac{2m}{(M + 2m)}.$$

The equations (1) could be represented as equations (A) and (B) and their solution coincides with the solution for equations (A) and (B).

From the correlation (2) one can see that local metrics could be controlled by changing of the total energy of 4-D gyroscope T. The energy of the gyroscope is changing under effect of the external forces F and the external forces momentum $L = 2mr^2 N$ according to formula

$$\frac{d}{dt}(T) = Fv + L\omega. \tag{3}$$

We could use L momentum to control metrics

$$g_{ij} = \begin{pmatrix} 1 - 2k^2 r^2 U(\phi)/c^2 & 0 & 0 \\ 0 & -1 & \\ 0 & & -k^2 (1 - k^2 \sin^2 \phi) \end{pmatrix}, \quad U(\phi) = \int_{\phi_0}^{\phi} N d\phi = \int_{\phi_0}^{\phi} \frac{L}{2mr^2}$$

and to write the relativistic equations as

$$\frac{d^2 x^i}{ds^2} + \Gamma^i{}_{jk} \frac{dx^j}{ds} \frac{dx^k}{ds} = -2g^{im} \Omega_{m(jk)} \frac{dx^j}{ds} \frac{dx^k}{ds} \quad i, j, k \ldots = 0, 1, 2 \tag{4}$$

where $\Omega_{ijk}$- Ricci rotation of the local space and

$$F_{in} = -(M + 2m) \Omega_{jk}{}^{..i} \frac{dx^j}{ds} \frac{dx^k}{ds} -$$

inertial force , created by L momentum of the external (related to the mechanical system of 4-D gyroscope) forces. In non relativistic limit we have from the equations (4)

$$(M + 2m)\frac{d}{dt}(v_c) = 2(M + 2m)rk^2\omega\sqrt{\frac{N\sin\phi\cos\phi}{1 - k^2\sin^2\phi} + \frac{1}{k^2}N_\phi}, \quad (A.1)$$

$$\frac{d\omega}{dt}(1 - k^2\sin^2\phi) - k^2\sin\phi\cos\phi\omega^2 = N - 2\sqrt{\frac{N\sin\phi\cos\phi}{1 - k^2\sin^2\phi} + \frac{1}{k^2}N_\phi}v_c, \quad (B.1)$$

where $N = L/2mr^2$- angular acceleration , created by the external (related to gyroscope) momentum L, and

$$F_{in} = 2(M + 2m)rk^2\omega\sqrt{\frac{N\sin\phi\cos\phi}{1 - k^2\sin^2\phi} + \frac{1}{k^2}N_\phi}, \quad (5)$$

- is a force, acting upon the center of masses. This force is created the Ricci rotation that is created by momentum L. Metrics of the relativistic local space helped by equations (4) to obtain (A.1) И (B.1), occurs to be Riemann space metrics. Space-time metric tensor of the system depends of L, meanwhile the Riemann tensor components $R_{ijkm}$ are not equal to zero. Thus in case if we can control L momentum, we shall be able to control local metrics as well as Riemann space curvature, by being able to move the center masses along our order.

## 2. Description of the Prior Art

The principle device has been proposed, demonstrating the motion of the center of masses by the control of local metrics and the local space curvature. The device is theoretically based upon the book "The theory of Physical Vacuum. A New Paradigm», Moscow, 1998, pp. 312 (English edition). This book had forecasted the new type of motion in vacuum (p.144). In order to demonstrate it we had to create artificial rotational fields, using 4-D rotations of element of masses of the system.

**Vacuum teleportation by metric engineering of warp**

**(pictorial demonstration of the basic concept.)**

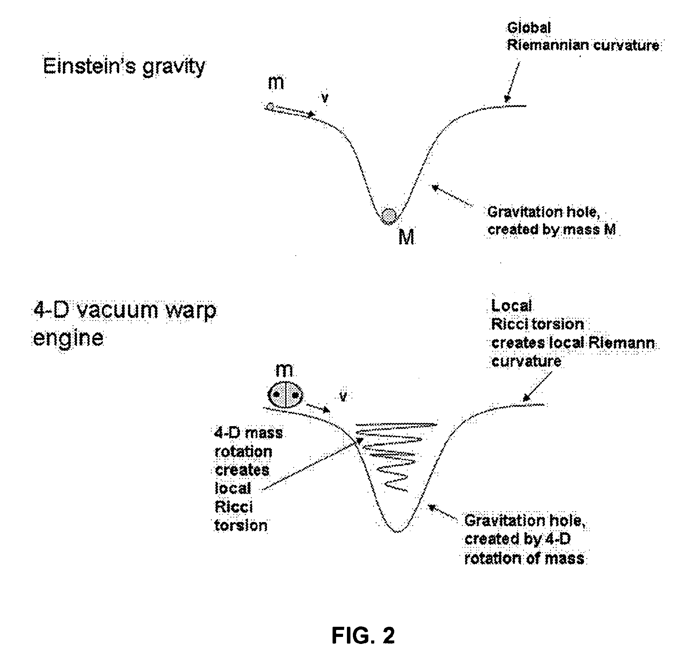

The fundamental idea of vacuum teleportation presented on Fig.2. The upper drawing depicts gravitational hole (Riemann curvature), created in space (after Einstein's theory) by body mass M. The small mass m falls into this hole. It moves due to the space curvature around body mass M.

The lower drawing demonstrates gravitational hole, created by vacuum-torsion propulsion system. The reason and cause between its work and motion in vacuum is as follows:

1. Using the energy source vacuum-torsion propulsion system created the guided rotation of its masses in its body.
2. The rotation of masses creates guided (controllable) local torsion fields (inertia fields)
3. Local torsion fields create local gravitational hole, where vacuum-torsion propulsion system falls in.
4. Thus vacuum-torsion propulsion system possesses special type of self-action, due to its constructional characteristics as well as elastic properties of physical vacuum.

**SUMMARY OF THE INVENTION**

The invention is a device called vacuum-torsion propulsion system or universal 4-D warp engine, controlling local torsion Ricci fields, local Riemann curvature and thus creating self-action. The effect of self action is reached due to the artificially created and controllable inertial forces inside the device, that provided the motion of its center of masses as well as could be expresses geometrically as Ricci rotation and Riemann curvature of local space. For the experimental research and proof of this statement the precision measuring stand for 4-D gyroscope had been created that allows

• To prove experimentally the motion of the center of masses as a result artificial curvature and rotation of local space;

- To register its kinematical characteristics such as:

  1) coordinate $x(t)$ mass $M$;

  2) coordinate $x_c(t)$ of the center of masses;

  3) rotation angle $\phi(t)$.

- To compute the following with the help of software program:

  1) velocity $v(t)$ of mass $M$;

  2) velocity $v_c(t)$ of the center of masses;

  3) angular velocity $\omega(t)$;

  4) acceleration $A(t)$ of masses $M$;

  5) acceleration $A_c(t)$ of the center of masses;

  6) angular acceleration $K(t)$.

**BRIEF DESCRIPTION OF THE DRAWINGS**

FIG.1 represents the principle scheme of 4-D gyroscope that served as a base for the construction of vacuum-torsion propulsion system with self-action or 4-D warp engine.
FIG.2. presents the principle concept ofteleportation of 4-D vacuum-torsion propulsion system or 4-D warp engine.
FIG.3. presents the principle scheme of 4-D vacuum-torsion propulsion system or 4-D warp engine (side view).

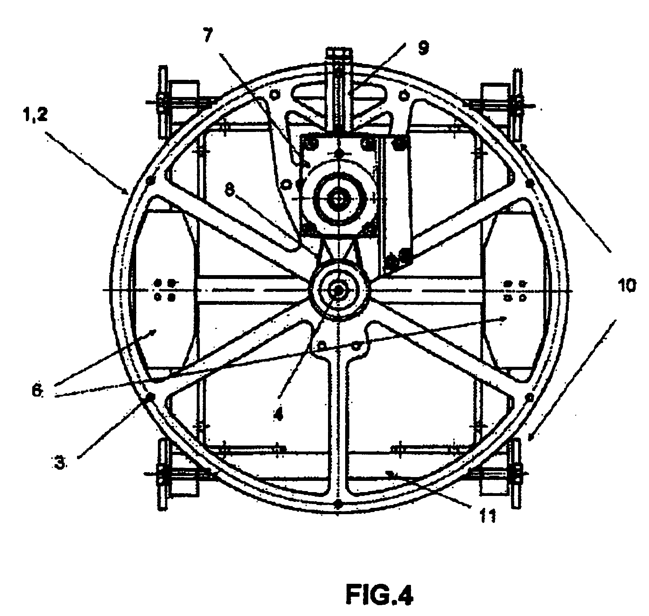

FIG.4 shows the principle scheme of 4-D vacuum-torsion propulsion system or 4-D warp engine (top view).
FIG. 5 demonstrated block scheme of the research stand for 4-D vacuum-torsion propulsion system or 4-D warp engine.

**DESCRIPTIONS OF THE PREFERED EMBODIMENTS**

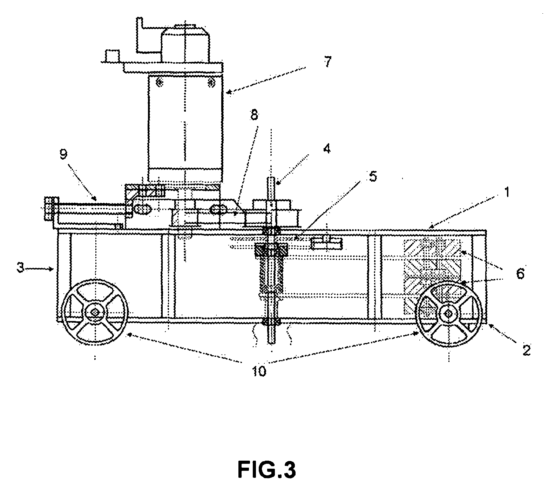

FIG.3 presents the principle device of 4-D vacuum-torsion propulsion system or 4-D warp engine. The lower body part 1 and upper body part 2 had been built from aluminum and connected by steel studs 3. The central shaft 4 is equipped with a differential mechanism 5, which rotates synchronously small masses 6 in different directions. The rotation performed by the servomotor 7, guided by software program. The servomotor rotation is transmitted to the shaft 4 rotation with the help belt 8. The belt tension had been regulated by the crew 9. The device body has been placed on the cartridge 11 with the wheels 10. Non balanced motion of small masses created the motion of the center of masses in one direction according to rule of the motor rotation.

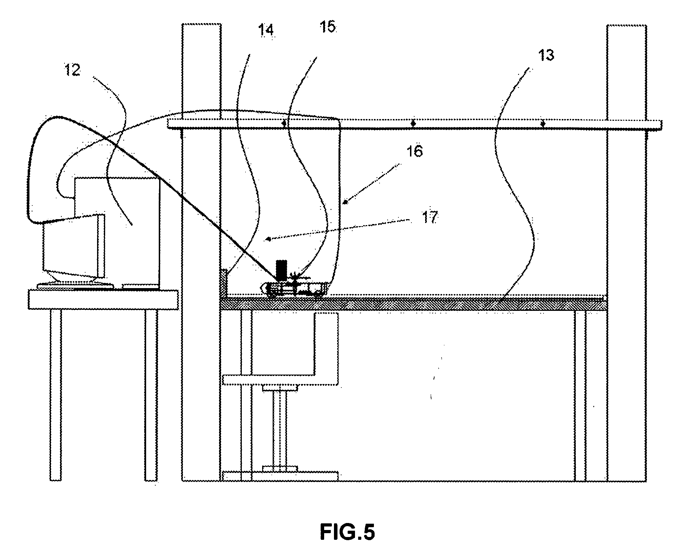

FIG. **5** the device has been placed on the horizontal glass surface 13. The motion back and forth guided by the software, sent from the computer to the motor 15 via loop 17. The values of angular momentum $\phi(t)$ have been registered during the motion of 4-D warp engine. The values of coordinates $x(t)$ have registered measured with the help of precision magnetic measuring system. The measurement data have been collected and sent via connection cable to another software program (at the computer 12), developed for the analyses of the experimental results.
Specially designed software allows to monitor and observe in real tine all the main kinematical parameters of 4-D device during its motion.
The stand includes a steel plate 14, allowing to investigate multiple impacts of 4-D gyroscope.

**Claims**

1. 4-D vacuum-torsion propulsion system or 4-D warp engine with self action, demonstrating the motion of the center of masses under action of artificially created local curvature of space -time by local metric engineering of warp consists of :

a. the lower body part 1. and upper body part 2 with the components 5,6-11 that are jointly with body forming mass M;

b. small masses 6, synchronously rotating in the different directions and creating rotational inertia;

c. during the rotation of small masses 6 the body together with small masses 6 moves translationally forth and back along axis x;

d. the axis 4 of the rotation of small masses 6 fixed on the body, that moves translationally, creating interaction between translational and rotational inertia;

e. the motor 7 provides non uniform rotation of masses 6 that results in motion of the center of masses of the system.

2. The device of claim 1 in which said: the motion of the components of the system generates Ricci rotation and Riemann curvature of the local space-time demonstrating the first step of vacuum teleportation by local metric engineering of warp

3. The device of claim 2 in which said: while the absence of the action of external forces, Ricci rotation and Riemann curvature of the local space-time act in such a way that the center of masses of the total system moves with some acceleration demonstrating the principle of self-action, that will allow to develop the engine with higher energy efficiency.

4. The device of claim 3 in which said the change of the direction of motion is achieved not by the change of the direction of the rotation of masses 6, but by the changes of the angles of the acceleration and breaking towards axis x, as well as from the initial value of the angular velocity of the rotation of small masses 6, creating translational inertia that allows it to move without breaks or a starter in the opposite directions, demonstrating novel principle of maneuverability.

5. The device of claim 4 in which said:

a. It demonstrates the motion of the center of masses under action of Ricci local rotation and Riemann curvature of the local-time space, combining the simplest oscillator and rotator as one body and thus demonstrating trinary principle in mechanics, based upon new paradigm.

b. The external forces such as friction forces, aerodynamic forces, etc, obstruct the motion of 4-D device and do not serve as the only cause of motion of its center of masses, that will allow it to move in vacuum with maximum efficiency.

c. 4-D vacuum-torsion propulsion system or 4-D warp engine may serve the base for the creation of principally new transportation vehicle, aimed at the universal application that will move in any media.

FIG. 1

Einstein's gravity

Global
Riemannian curvature

m
v

Gravitation hole,
created by mass M

M

4-D vacuum warp
engine

Local
Ricci torsion
creates local Riemann
curvature

m
v

4-D mass
rotation
creates
local
Ricci
torsion

Gravitation hole,
created by 4-D
rotation of mass

FIG. 2

**FIG.3**

**FIG.4**

**FIG.5**

**European Patent Office**

## PARTIAL EUROPEAN SEARCH REPORT

which under Rule 45 of the European Patent Convention shall be considered, for the purposes of subsequent proceedings, as the European search report

**Application Number**

EP 05 00 0950

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 770 555 A (ANDREW REID) 20 March 1957 (1957-03-20) * the whole document * ----- | 1 | G01C19/00 F03G3/08 |

**TECHNICAL FIELDS SEARCHED (Int.Cl.7)**

G01C
F03G

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 14 June 2005 | Hoekstra, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................................
& : member of the same patent family, corresponding document

EPO FORM 1503 03.82 (P04C07)

**European Patent Office**

**INCOMPLETE SEARCH**
**SHEET C**

Application Number

EP 05 00 0950

Claim(s) searched incompletely:
    1-5

Claim(s) not searched:
        -

Reason for the limitation of the search:

The application is concerned with a propulsion system which, it is alleged, controls "torsion fields", thus creating "self-action". These so-called "torsion fields" have been debated for quite some time in scientific literature. Their existence is, however, as yet unproven. If they do exist, their interaction with matter must be extremely weak, at any rate too weak to account for the propulsion system described. To posit their existence as a basis for such a system is mere speculation and cannot be considered as disclosing the invention in a manner sufficiently clear and complete for it to be carried out by the person skilled in the art (Art. 83 EPC). Since the torsion with self action even appears in the claims, these are not clear (Art. 84 EPC). Furthermore, the claims abound with objects to be achieved, phrased in terminology which is highly suggestive but non-standard and therefore essentially meaningless in the field of inertial propulsion systems, which gives rise to further clarity objections. Claim 1, for instance, has "the propulsion system (...) demonstrating the motion of the center of masses under action of artificially created local curvature of space-time by local metric engineering of warp". Similar considerations apply for claim 2 (demonstrating the first step of vacuum teleportation by local metric engineering of warp), claim 3 ( the principle of self-action (...) will allow to develop the engine with higher energy efficiency), claim 4 (demonstrating novel principle of maneuverability), and claim 5 (demonstrating trinary principle in mechanics, based upon new paradigm; to move in vacuum with maximum efficiency; aimed at the universal application that will move in any media). As a result, the present application does not comply with the provisions of the Convention to such an extent that it is not possible to carry out a meaningful search into the state of the art on the basis of the present claims (Rule 45 EPC). Therefore, the search has been limited to background art only concerning propulsion systems using inertial forces.

## ANNEX TO THE EUROPEAN SEARCH REPORT
## ON EUROPEAN PATENT APPLICATION NO.

EP 05 00 0950

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2005

| Patent document cited in search report | Publication date | Patent family member(s) | Publication date |
|---|---|---|---|
| GB 770555 A | 20-03-1957 | NONE | |

For more details about this annex : see Official Journal of the European Patent Office, No. 12/82